# EUROPÄISCHE PATENTSCHRIFT

(11) **EP 2 307 744 B1**
(45) Veröffentlichungstag und Bekanntmachung des Hinweises auf die Patenterteilung: **27.03.2013**
(21) Anmeldenummer: 09772081.7
(22) Anmeldetag: 12.06.2009
(51) Int. Cl.: F16B 27/00

(54) **VORRICHTUNG ZUM HALTEN VON ELEMENTEN IN EINER IN LÄNGSRICHTUNG AUFEINANDER FOLGENDEN ANORDNUNG**
DEVICE FOR HOLDING ELEMENTS IN A SUCCESSIVE ARRANGEMENT IN A LONGITUDINAL DIRECTION
DISPOSITIF POUR MAINTENIR DES ELEMENTS EN DISPOSITION SUCCESSIVE EN SENS LONGITUDINAL

(30) Priorität: 03.07.2008 DE 102008031475
(43) Veröffentlichungstag der Anmeldung: 13.04.2011
(73) Patentinhaber: A. RAYMOND ET CIE, 38000 Grenoble (FR)
(72) Erfinder: BÜSCH, Martin, 79588 Efringen-Kirchen (DE); LESSER, Hans-Jürgen, 79618 Rheinfelden (DE)
(74) Vertreter: RACKETTE Partnerschaft Patentanwälte
(86) Internationale Anmeldenummer: PCT/EP2009/004240
(87) Internationale Veröffentlichungsnummer: WO 2010/000381

(56) Entgegenhaltungen:
- EP-A- 0 770 806
- WO-A1-95/09705
- DE-A1- 2 512 825
- DE-A1- 4 109 772
- DE-A1- 10 162 635
- GB-A- 2 244 318
- US-A- 4 062 388
- US-A1- 2004 179 919

## Beschreibung

Die Erfindung betrifft eine Vorrichtung zum Halten von Elementen in einer in einer Längsrichtung aufeinander folgenden Anordnung gemäß dem Oberbegriff des Patentanspruches 1.

Eine derartige Vorrichtung ist aus DE 101 62 635 A1 bekannt. Bei der gattungsgemäßen Vorrichtung zum Halten von Elementen in einer in einer Längsrichtung aufeinander folgenden Anordnung sind zwei Randstreifen vorhanden und eine Anzahl von Halteringe aufweisenden Halteeinheiten zum Halten der Elemente ausgebildet. Jeder Haltering ist über zwei seitliche Anbindungsstege mit den Randstreifen verbunden, wobei die Halteringe unlösbar mit den Randstreifen verbunden bleiben.

Aus WO 95/09705 A1 ist eine Vorrichtung zum Halten von Elementen in einer in einer Längsrichtung aufeinander folgenden Anordnung bekannt, bei der eine Halteinheit vorhanden ist, die über eine Fixieranordnung mit einer Anzahl von Fixiersockeln verfügt, mit denen ein Element lösbar fixierbar ist und die an dem Haltering angeformt sind, in einer Richtung rechtwinklig zu der Ebene des Halteringes über den Haltering überstehen und mit einer Fixiernase radial nach innen über eine Innenseite des Halteringes überstehen. Die Fixieranordnung weist weiterhin eine Anzahl von Widerlagerstege auf, die an der Innenseite des Halteringes angeformt sind und die sich radial nach innen erstrecken.

Eine weitere Vorrichtung zum Halten von Elementen in einer in einer Längsrichtung aufeinander folgenden Anordnung ist aus US-A-4,062,388 bekannt. Bei dieser vorbekannten Vorrichtung zum Halten von als Schrauben ausgebildeten Elementen in einer in einer Längsrichtung aufeinander folgenden Anordnung sind zwei Randstreifen und eine Anzahl von als geschlossene Halteringe ausgebildeten Halteeinheiten zum Halten der Elemente vorhanden. Jeder Haltering ist jeweils über einen seitlichen Anbindungssteg mit zwei Randstreifen verbunden. Die Anbindungsstege werden mit einem Werkzeug bei Applizieren der Schrauben durchtrennt, so dass der Haltering als Beilagscheibe für die durch ihn durchgesteckte Schraube Verwendung findet.

Aus EP 0 770 806 A1 ist eine Vorrichtung zum Halten von Elementen in einer in einer Längsrichtung aufeinander folgenden Anordnung bekannt, bei der als Leitungshalter ausgebildete Fixieranordnungen über jeweils zwei Paare von Anbindungsstegen mit zwei seitlichen Randstreifen verbunden sind.

Aus GB 2 244 318 A ist eine Vorrichtung zum Halten von Elementen in einer in einer Längsrichtung aufeinander folgenden Anordnung bekannt, bei der Fixieranordnungen über jeweils einen Anbindungssteg an einen mittigen Zentralstreifen angebunden sind.

Aus DE 41 09 772 A1 ist eine Vorrichtung bekannt, bei der wenigstens ein Randstreifen vorhanden ist und eine Anzahl von Halteeinheiten zum Halten von Elementen in Gestalt von beispielsweise als Drückknöpfe ausgestalteten Kunststoffteilen ausgebildet sind. Jede Halteeinheit ist über wenigstens einen rechtwinklig zu dem oder jedem Transportband ausgerichteten seitlichen Anbindungssteg mit dem oder wenigstens einem Transportband verbunden. Dadurch lassen sich die in einer in einer Längsrichtung aufeinander folgenden Anordnung in den Halteeinheiten gehaltenen Elemente sehr ökonomisch bevorraten und einem Handhabungswerkzeug zuführen, das den oder jeden mechanisch verhältnismäßig schwach ausgebildeten Anbindungssteg durchtrennt, um die Elemente zu applizieren.

Aus DE 25 12 825 A1 ist eine Vorrichtung zum Halten von als Schrauben ausgebildeten Elementen in einer in einer Längsrichtung aufeinander folgenden Anordnung bekannt, bei dem C-artig ausgebildete Halteeinheiten über Zwischenstege miteinander verbunden sind. Die Schrauben sind über die randseitige Öffnung in die C-artigen Halteeinheiten einfügbar und aus diesem wieder entfernbar.

Der Erfindung liegt die Aufgabe zugrunde, eine Vorrichtung zum Halten von Elementen in einer in einer Längsrichtung aufeinander folgenden Anordnung gemäß der eingangs genannten Art anzugeben, die wiederverwendbar ist und bei der die Elemente vor dem Applizieren sicher gehalten, aber dennoch mit einem relativ Kraftaufwand lösbar sind.

Diese Aufgabe wird bei einer Vorrichtung zum Halten von Elementen in einer in einer Längsrichtung aufeinander folgenden Anordnung der eingangs genannten Art erfindungsgemäß mit den kennzeichnenden Merkmalen des Patentanspruches 1 gelöst.

Dadurch, dass beidseitig von sich radial nach innen erstreckenden Widertagerstegen jeweils eine sich in radialer Richtung zu einer Außenseite des Halteringes erstreckende Schwächungsausnehmung ausgebildet ist, ergibt sich bei einem sicheren Halt der Elemente aufgrund der relativ leichten Verkippung der Widerlagerstege aus der Ebene des Halteringes heraus bei Ausüben einer in axialer Richtung wirkenden Kraft ein relativ leichtes Lösen der Elemente.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnungen.

Es zeigen:
- Fig. 1: in einer perspektivischen Ansicht eine erfindungsgemäße Vorrichtung in einem Ausschnitt mit zwei Randstreifen und einer Anzahl von Halteeinheiten, bei denen eine mit einem als Maschinenschraube ausgebildeten Element bestückt ist, mit Blick auf die dem Betrachter zugewandte Oberseite,
- Fig. 2: in einer perspektivischen ausschnittsweisen Ansicht das Ausführungsbeispiel gemäß Fig. 1 mit Blick auf die dem Betrachter zugewandte Unterseite,
- Fig. 3: in einer stirnseitigen Seitenansicht das Ausführungsbeispiel gemäß Fig. 1 mit Blick auf die mit der Maschinenschraube bestückte Halteeinheit,
- Fig. 4: in einer detaillierten perspektivischen Ansicht ein weiteres Ausführungsbeispiel einer erfindungsgemäßen Vorrichtung mit zwei Randstreifen und einer Anzahl von Halteeinheiten mit Blick auf die dem Betrachter zugewandte Oberseite einer Halteeinheit und
- Fig. 5: in einer perspektivischen Ansicht das Ausführungsbeispiel gemäß Fig. 4 mit Blick auf die auf die dem Betrachter zugewandte Unterseite einer mit einer Maschinenschraube bestückten Halteeinheit.

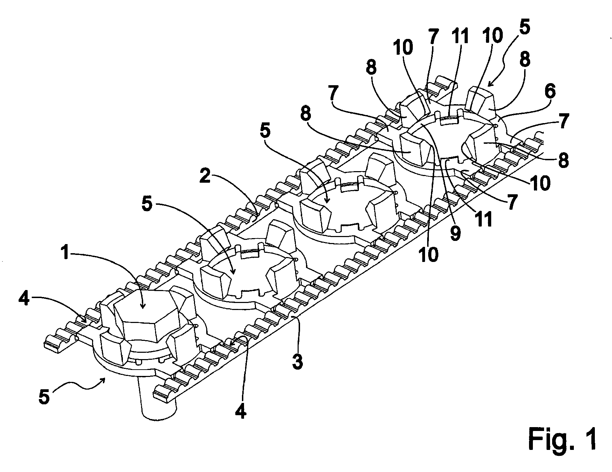

Fig. 1 zeigt in einer perspektivischen Ansicht mit Blick auf die in der Darstellung gemäß Fig. 1 dem Betrachter zugewandte Oberseite ein Ausführungsbeispiel einer erfindungsgemäßen Vorrichtung zum Halten von beispielsweise als Maschinenschrauben ausgebildeten Elementen 1 in einer in einer Längsrichtung aufeinander folgenden Anordnung, die vorzugsweise aus einem hartelastischen Kunststoff in einem kontinuierlichen beziehungsweise quasikontinuierlichen Verfahren wie Spritzgießen, Extrudieren oder Heissprägen hergestellt ist. Das Ausführungsbeispiel gemäß Fig. 1 verfügt über zwei in einem Abstand in einer parallelen Anordnung zueinander ausgerichtete Randstreifen 2, 3, die auf einer der Darstellung gemäß Fig. 1 dem Betrachter zugewandten Oberseite jeweils mit einer Zahnstruktur 4 ausgebildet sind. Die Zahnstrukturen 4 dienen zum Eingriff mit Antriebselementen eines in Fig. 1 nicht dargestellten Handhabungswerkzeugs zum Applizieren der Elemente 1.

Zwischen den Randstreifen 2, 3 sind in einer in Längsrichtung der Randstreifen 2, 3 regelmäßig beabstandeten, aufeinander folgenden Anordnung eine Anzahl von artikelspezifisch an die jeweils zu haltenden Elemente angepasste Halteeinheiten 5 angeordnet, die jeweils über einen umfänglich geschlossenen planen Haltering 6 verfügen. Die Halteringe 6 sind bei diesem Ausführungsbeispiel über zwei Paare von in ihrer Breite in etwa der Breite des Halteringes 6 entsprechende seitliche Anbindungsstege 7, die rechtwinklig zu den Randstreifen 2, 3 ausgerichtet sind, mit beiden Randstreifen 2, 3 verbunden.

Jede Halteeinheit 5 ist weiterhin mit einer Fixieranordnung ausgebildet, die über Fixiersockel 8 verfügt, die auf einer Seite des Halteringes 6, bei diesem Ausführungsbeispiel in der Darstellung gemäß Fig. 1 der dem Betrachter zugewandten Oberseite, an den Haltering 6 angeformt sind. Bei dem Ausführungsbeispiel gemäß Fig. 1 sind vier Fixiersockel 8 vorhanden, die in einem Winkelabstand von 90 Grad diametral einander gegenüber liegend angeordnet sind. Jeder Fixiersockel 8 ist mit einer radial über eine Innenseite 9 des Halteringes 6 nach innen überstehende Fixiernase 10 ausgebildet. Weiterhin verfügen die Fixieranordnungen jeder Halteeinheit 5 über an der Innenseite 9 der Halteringe 6 angeformte, radial nach innen vorspringende Widerlagerstege 11, wobei jeder Widerlagersteg 11 in der Mitte zwischen zwei Fixiersockeln 8 angeordnet ist. Bei dem Ausführungsbeispiel gemäß Fig. 1 sind die Widerlagerstege in der Ebene des Halteringes 6 angeordnet.

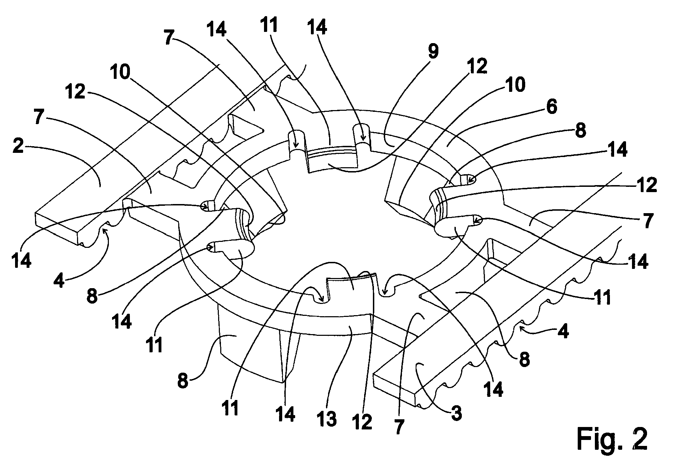

Fig. 2 zeigt in einer perspektivischen Ansicht eine Halteeinheit 5 gemäß dem in Fig. 1 dargestellten Ausführungsbeispiel mit Blick auf die in der Darstellung gemäß Fig. 2 dem Betrachter zugewandte, der Zahnstruktur 4 gegenüber liegende Unterseite. Aus der Darstellung gemäß Fig. 2 ist ersichtlich, dass jeder Widerlagersteg 11 an seinem in den Innenraum des Halteringes 6 hineinragenden freien Ende eine abgerundete Stirnseite 12 aufweist und dass beidseitig des Anbindungsbereiches jedes Widerlagersteges 11 mit dem Haltering 6 jeweils eine sich in radialer Richtung von der Innenseite 9 des Halteringes 6 zu der Außenseite 13 des Halteringes 6 erstreckende Schwächungsausnehmung 14 ausgebildet ist. Dadurch lässt sich jeder Widerlagersteg 11 bei Ausüben einer rechtwinklich von der Oberseite in Richtung der Unterseite auf ein in der Halteeinheit 5 angeordnetes, in Fig. 2 nicht dargestelltes Element 1 jeder Widerlagersteg 11 mit einem verhältnismäßig geringen Kraftaufwand aus der Ebene des Halteringes 6 heraus bewegen, um das Element 1 unter Beibehalten der Verbindung zwischen der Halteeinheit 5 und den Randstreifen 2, 3 lösen. Somit bleibt jede Halteeinheit 5 im Rahmen einer bestimmungsgemäßen Verwendung unlösbar mit den Randstreifen 2, 3 verbunden.

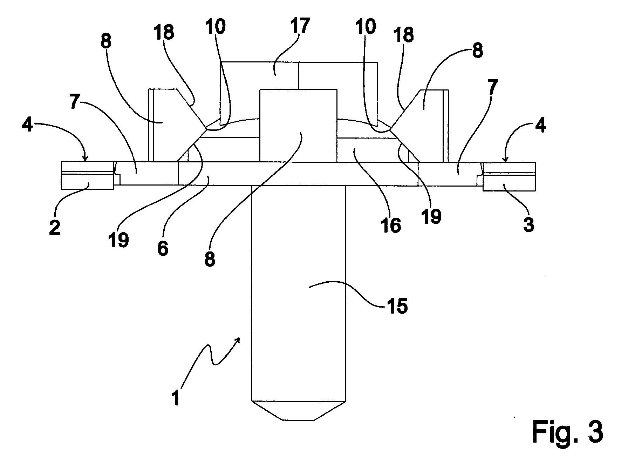

Fig. 3 zeigt in einer stirnseitigen Seitenansicht das Ausführungsbeispiel gemäß Fig. 1 mit Blick auf ein in einer Halteeinheit 5 angeordnetes Element 1 in Gestalt einer Maschinenschraube, die mit einem Schaft 15, mit einem Kopfteller 16 und mit einer Werkzeugansatzstruktur 17 ausgebildet ist. Aus Fig. 3 ist ersichtlich, dass jeder Fixiersockel 8 auf seiner dem Haltering 6 abgewandten Seite eine Einführschräge 18 aufweist, die sich schräg zu der Fixiernase 10 erstreckt, während auf der den Haltering 6 zugewandten Seite eine Klemmschräge 19 vorhanden ist, die in der Darstellung gemäß Fig. 3 auf der dem Haltering 6 abgewandten Oberseite des Kopftellers 16 anliegt. Die dem Haltering 6 zugewandte Unterseite des Kopftellers 16 liegt wiederum auf den in Fig. 3 nicht sichtbaren Widerlagerstegen 11 auf, so dass das betreffende Element 1 durch die aus den Fixiersockeln 8 und den Widerlagerstegen 11 gebildete Fixieranordnung stabil fixiert ist.

Zum Applizieren eines Elementes 1 ist auf das betreffende Element 1 eine in Richtung von der Oberseite zu der Unterseite des Halteringes 6 wirkende Kraft auszuüben, um das Element 1 aus der Fixieranordnung zu lösen, wobei vorteilhafterweise zwischen den Fixiersockeln 8 und der Werkzeugansatzstruktur 17 ein ausreichender Abstand zum Eingriff eines in Fig. 2 nicht dargestellten Werkzeugs mit der Werkzeugansatzstruktur 17 belassen ist.

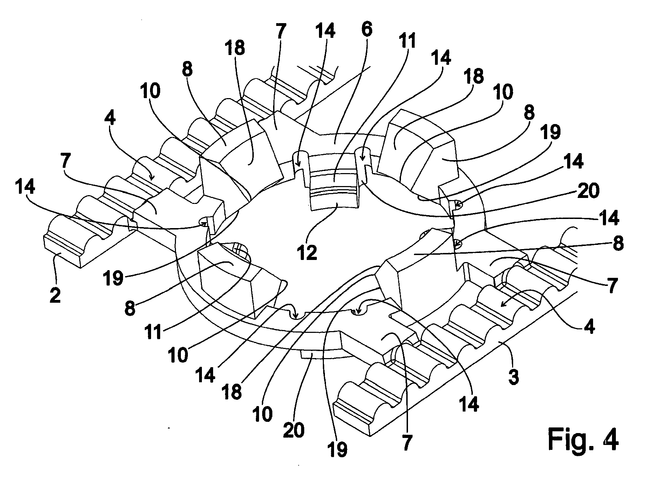

Fig. 4 zeigt in einer detaillierten perspektivischen Ansicht ein weiteres Ausführungsbeispiel einer erfindungsgemäßen Vorrichtung mit Blick auf die in der Darstellung gemäß Fig. 4 dem Betrachter zugewandte Oberseite, wobei sich bei dem Ausführungsbeispiel gemäß Fig. 1 bis Fig. 3 und dem Ausführungsbeispiel gemäß Fig. 4 einander entsprechende Komponenten mit den gleichen Bezugszeichen versehen und im weiteren nicht näher erläutert sind. Aus Fig. 4 ist ersichtlich, dass bei diesem Ausführungsbeispiel die Widerlagerstege 11 über jeweils einen Stegabschnitt 20, der sich rechtwinklig zu dem betreffenden Widerlagesteg 11 erstreckt, auf der den Fixiersockeln 8 abgewandten Seite mit dem Haltering 6 verbunden sind. Dadurch sind die Widerlagerstege 11 mit Auflageabschnitten 21 in einer Ebene angeordnet, die zu der Ebene des betreffenden Halteringes 6 versetzt liegt, wodurch ein Aufnahmeraum zwischen den Fixiernasen 10 und den Widerlagerstegen 11 zum Halten von verhältnismäßig dick ausgebildeten Elementen 1 verhältnismäßig groß ausgebildet ist.

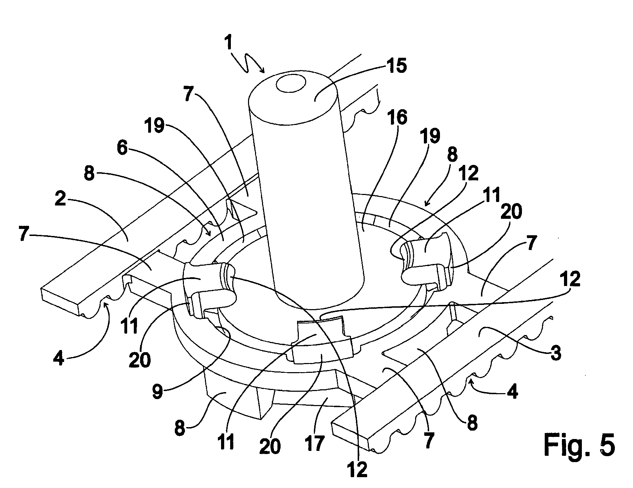

Fig. 5 zeigt das Ausführungsbeispiel gemäß Fig. 4 mit Blick auf die in der Darstellung gemäß Fig. 5 dem Betrachter zugewandte Unterseite mit einem in die Halteeinheit 5 eingefügten Element 1. Aus Fig. 5 ist ersichtlich, dass zwischen dem Kopfteller 16 des Elementes 1 und der Innenseite 9 des Halteringes 6 ein radialer Abstand vorhanden ist, so dass das Element 1 im Rahmen der Elastizität der Fixiersockel 8 mit einem gewissen Spiel in dem Haltering 6 fixiert ist, um Toleranzen auszugleichen.

## Patentansprüche

1. Vorrichtung zum Halten von Elementen (1) in einer in einer Längsrichtung aufeinander folgenden Anordnung mit wenigstens einem Randstreifen (2, 3) und mit einer Anzahl von Halteringe (6) aufweisenden Halteeinheiten (5) zum Halten der Elemente (1), wobei jeder Haltering (6) über wenigstens einen seitlichen Anbindungssteg (7) mit dem oder wenigstens einem Randstreifen (2, 3) verbunden ist und wobei die Halteringe (6) unlösbar mit dem oder jedem Randstreifen (2, 3) verbunden bleiben, **dadurch gekennzeichnet, dass** jede Halteeinheit (5) über eine Fixieranordnung mit einer Anzahl von Fixiersockeln (8) verfügt, mit denen ein Element (1) lösbar fixierbar ist und die an dem Haltering (6) angeformt sind, in einer Richtung rechtwinklig zu der Ebene des Halteringes (6) über den Haltering (6) überstehen und mit einer Fixiernase (10) radial nach innen über eine Innenseite (9) des Halteringes (6) überstehen, dass die Fixieranordnung eine Anzahl von Widerlagerstegen (11) aufweist, die an der Innenseite (9) des Halteringes (6) angeformt sind und die sich radial nach innen erstrecken, und dass beidseitig jedes Widerlagersteges (11) jeweils eine sich in radialer Richtung zu einer Außenseite (13) des Halteringes (6) erstreckende Schwächungsausnehmung (14) ausgebildet ist.

2. Vorrichtung nach Anspruch 1, **dadurch gekennzeichnet, dass** jeder Widerlagersteg (11) in Umfangsrichtung zwischen zwei Fixiersockeln (8) angeordnet ist.

3. Vorrichtung nach Anspruch 1 oder Anspruch 2, **dadurch gekennzeichnet, dass** jeder Widerlagersteg (11) in der Ebene des Halteringes (6) angeordnet ist.

4. Vorrichtung nach Vorrichtung nach Anspruch 1 oder Anspruch 2, **dadurch gekennzeichnet, dass** jeder Widerlagersteg (11) über einen sich rechtwinklig auf die den Fixiersockel (8) abgewandte Seite von dem Haltering (6) wegweisend erstreckender Stegabschnitt (20) mit dem Haltering (6) verbunden und in einer zu der Ebene des Halteringes (6) versetzten Ebene angeordnet ist.

5. Vorrichtung nach einem der Ansprüche 1 bis 4, **dadurch gekennzeichnet, dass** jeder Widerlagersteg (11) an einem von dem Haltering (6) wegweisenden freien Ende mit einer abgerundeten Stirnseite (12) ausgebildet ist.

6. Vorrichtung nach einem der Ansprüche 1 bis 5, **dadurch gekennzeichnet, dass** zwei zueinander parallele Randstreifen (2, 3) vorhanden sind und dass jede Halteeinheit (5) mit beiden Randstreifen (2, 3) verbunden ist.

7. Vorrichtung nach Anspruch 6, **dadurch gekennzeichnet, dass** jede Halteeinheit (5) mit jeweils zwei Anbindungsstegen (7) mit einem Randstreifen (2, 3) verbunden ist.

## Claims

1. Device for holding elements (1) in a successive arrangement in a longitudinal direction, having at least one edge strip (2, 3) and having a plurality of holding units (5), having holding rings (6), to hold the elements (1), each holding ring (6) being connected to the or at least one each strip (2, 3) by at least one lateral connecting web (7) and the holding rings (6) remaining non-detachably connected to the or each edge strip (2, 3), **characterised in that** each holding unit (5) has a fixing arrangement having a plurality of fixing blocks (8) by which an element (1) can be releasably fixed in position and which are integrally formed on the holding ring (6), which project above the holding ring (6) in a direction at right angles to the plane of the holding ring (6) and which project inwards radially beyond an inner side (9) of the holding ring (6) at a fixing nose (10), **in that** the fixing arrangement has a plurality of abutment tongues (11) which are integrally formed on the inner side (9) of the holding ring (6) and which extend inwards radially, and **in that** a weakening recess (14) which extends in the radial direction relative to an outer side (13) of the holding ring (6) is formed on each of the two sides of each abutment tongue (11).

2. Device according to claim 1, **characterised in that** each abutment tongue (11) is arranged between two fixing blocks (8) in the circumferential direction.

3. Device according to claim 1 or claim 2, **characterised in that** each abutment tongue (11) is arranged in the plane of the holding ring (6)

4. Device according to claim 1 or claim 2, **characterised in that** each abutment tongue (11) is connected to the holding ring (6) by a portion (20) which extends at right angles on the side remote from the fixing blocks (8) in such a way as to point away from the holding ring (6) and which is arranged in a plane which is offset from the plane of the holding ring (6)

5. Device according to one of claims 1 to 4, **characterised in that** each abutment tongue (11) is formed to have a rounded end-face (12) at a free end facing away from the holding ring (6).

6. Device according to one of claims 1 to 5, **characterised in that** there are two mutually parallel edge strips (2, 3) and **in that** each holding unit (5) is connected to both edge strips (2, 3).

7. Device according to claim 6, **characterised in that** each holding unit (5) is connected to an edge strip (2, 3) by, in each case, two connecting webs (7).

## Revendications

1. Dispositif de maintien en position d'éléments (1) qui sont disposés à la suite l'un de l'autre dans le sens longitudinal, comprenant au moins une bandelette de rive (2, 3) et comprenant des organes de maintien en position (5) munis d'un certain nombre de bagues de retenue (6) pour assurer le maintien en position des éléments (1), dans lequel chaque bague de retenue (6) est raccordée par l'intermédiaire d'au moins une barrette entretoise de liaison (7) à la ou au moins une bandelette de rive (2, 3) et dans lequel les bagues de retenue (6) restent raccordées de manière indissociable à la ou à chaque bandelette de rive (2, 3), **caractérisé en ce que** chaque organe de maintien en position (5) est muni d'un agencement de maintien en position comportant un certain nombre de patins d'immobilisation en position (8), au moyen desquels un élément (1) peut être immobilisé en position avec une possibilité de démontage ultérieur et qui sont réalisés solidaires par moulage de la bague de retenue (6), qui font saillie au-dessus de la bague de retenue (6) dans une direction perpendiculaire au plan de la bague de retenue (6) et qui font saillie par un ergot de maintien en position (10) dans le plan radial vers l'intérieur au-dessus de la face intérieure (9) de la bague de retenue (6), **en ce que** l'agencement de maintien en position comporte un certain nombre de pontets de butée (11), qui sont réalisés solidaires par moulage de la face intérieure (9) de la bague de retenue (6) et qui s'étendent vers l'intérieur dans le plan radial et **en ce que**, de part et d'autre de chaque pontet de butée (11), il est respectivement prévu une échancrure d'atténuation de résistance structurale (14) qui s'étend dans le plan radial en direction de la face extérieure (13) de la bague de retenue (6).

2. Dispositif selon la revendication 1, **caractérisé en ce que** chaque pontet de butée (11) est disposé dans la direction périphérique entre deux patins d'immobilisation en position (8).

3. Dispositif selon la revendication 1 ou la revendication 2, **caractérisé en ce que** chaque pontet de butée (11) est disposé dans le plan de la bague de retenue (6).

4. Dispositif selon la revendication 1 ou la revendication 2, **caractérisé en ce que** chaque pontet de butée (11) est raccordé à la bague de retenue (6) par l'intermédiaire d'une portion formant montant en saillie (20) qui s'étend, dans la direction opposée à la bague de retenue (6), verticalement sur le côté opposé aux patins d'immobilisation en position (8), et est disposé dans un plan décalé par rapport au plan de la bague de retenue (6).

5. Dispositif selon l'une des revendications 1 à 4, **caractérisé en ce que** chaque pontet de butée (11) présente, au niveau de son extrémité libre orientée à l'opposé de la bague de retenue (6), une face antérieure cintrée (12).

6. Dispositif selon l'une des revendications 1 à 5, **caractérisé en ce qu'**il est prévu deux bandelettes de rive (2, 3) respectivement disposées parallèlement l'une à l'autre et **en ce que** chaque organe de maintien en position (5) est raccordé aux deux bandelettes de rive (2, 3).

7. Dispositif selon la revendication 6, **caractérisé en ce que** chaque organe de maintien en position (5) est raccordé par respectivement deux barrettes entretoises de liaison (7) à une bandelette de rive (2, 3).
